# DEMANDE DE BREVET EUROPEEN

(11) **EP 0 689 975 A1**
(43) Date de publication de la demande: **03.01.1996**
(21) Numéro de dépôt: 95109979.5
(22) Date de dépôt: 27.06.1995
(51) Int. Cl.: B60S 1/04

(54) **Platine-support d'un mécanisme d'essuie glace comportant une plaque-support en deux parties**

(30) Priorité: 30.06.1994 FR 9408037
(71) Demandeur: VALEO SYSTEMES D'ESSUYAGE, F-78321 La Verriere (FR)
(72) Inventeur: Lisiecki, Bruno, F-92320 Chatillon (FR)
(74) Mandataire: Gamonal, Didier

(57) **Abrégé**

L'invention propose une platine-support d'un mécanisme d'essuie-glace du type comportant une plaque (22) formant support pour divers composants du mécanisme, notamment pour des organes d'entraînement des essuie-glace, et qui comporte des moyens pour sa fixation sur un élément de la caisse du véhicule, et du type comportant au moins un élément de structure de forme allongé (24) fixé à la plaque-support (22) et dont un tronçon d'extrémité libre porte un palier de support pour un arbre d'essuie-glace, caractérisée en ce que la plaque-support (22) est réalisée en deux demi-plaques (22A,22B) et comporte un logement (46A,46B) qui reçoit une partie (40) de l'élément de structure (24).

## Description

La présente invention concerne une platine support perfectionnée d'un mécanisme d'essuie-glace.

L'invention concerne plus particulièrement une platine-support du type comportant une plaque formant support pour divers composants du mécanisme d'essuie-glace, notamment pour des organes d'entraînement des essuie-glaces, et qui comporte des moyens pour sa fixation sur un élément de la caisse du véhicule, et du type comportant au moins un élément de structure de forme allongée fixé à la platine-support et dont un tronçon d'extrémité libre porte un palier de support pour un arbre d'essuie-glace.

Selon une conception connue, la plaque support est réalisée sous la forme d'une plaque de tôle pliée et découpée, renforcée par des nervures et dont un bord est incurvé pour constituer un logement semi-cylindrique ouvert gui reçoit un tronçon tubulaire de forme complémentaire de l'élément de structure allongé, qui est par exemple réalisé sous la forme d'un tube coudé et cintré, l'élément de structure étant fixé à la plaque-support métallique par soudage.

Le poids de la plaque-support métallique en tôle épaisse est très important et sa technique de fabrication ne permet pas de s'adapter de manière simple aux formes complexes qu'elle doit présenter, la complexité de ses formes étant de plus en plus grande du fait du peu de place disponible dans les compartiments moteur pour l'aménagement des mécanismes d'essuie-glace.

L'invention a pour but de proposer une nouvelle conception de la plaque-support d'une platine-support qui remédie aux inconvénients qui viennent d'être mentionnés.

Dans ce but l'invention propose une platine-support perfectionnée du type mentionné précédemment, caractérisée en ce que la plaque-support est réalisée en deux demi-plaques et comporte un logement qui reçoit une partie de l'élément de structure.

Selon d'autres caractéristiques de l'invention :
- le logement est constitué par deux demi-logements dont chacun est formé dans une demi-plaque et s'ouvre dans le plan de joint des deux demi-plaques ;
- les deux demi-plaques sont collées selon leur plan de joint ;
- il est prévu des moyens d'assemblage des deux demi-plaques ;
- les moyens d'assemblage sont des moyens par emboîtement de formes complémentaires agencées le long d'un bord de la plaque-support ;
- les moyens d'assemblage sont des moyens de serrage selon une direction sensiblement perpendiculaire au plan général de la plaque-support ;
- les moyens de serrage comportent des pinces qui enserrent des bords en vis-à-vis des deux demi-plaques ;
- les moyens d'assemblage comportent des moyens formant rivets réalisés venus de matière avec les deux demi-plaques ;
- les deux demi-plaques sont réalisées par moulage en matière plastique ou en alliage léger ;
- le logement est un trou qui reçoit un tronçon de l'élément de structure et il est prévu des moyens d'immobilisation axiale et en rotation du tronçon dans le logement ;
- les moyens d'immobilisation sont des moyens par coopération de formes complémentaires ;
- la paroi du troncon de l'élément de structure comporte une rainure longitudinale et chacune des deux demi-plaques comporte un bord longitudinal replié qui est reçu au moins partiellement dans la rainure ;
- les moyens d'immobilisation comportent au moins un élément transversal de verrouillage qui est reçu à l'intérieur du tronçon de l'élément de structure ;
- l'élément transversal de verrouillage est réalisé venu de matière par moulage avec une demi-plaque ;
- l'élément transversal de verrouillage est un élément rapporté qui traverse la paroi du logement et qui est reçu à l'intérieur du tronçon de l'élément de structure ;
- le tronçon de l'élément de structure est collé dans le logement ;
- les moyens pour la fixation de la plaque-support comportent des trous pour le passage de corps appartenant à des organes de fixation tels que des vis qui sont formés dans au moins un insert ;
- au moins un insert est noyé lors du moulage d'une demi-plaque ;
- au moins un insert est retenu entre les deux demi-plaques.

D'autres caractéristiques et avantages de l'invention apparaîtront à la lecture de la description détaillée qui va suivre pour la compréhension de laquelle on se reportera aux dessins annexés dans lesquels :
- La figure 1 est une vue schématique en perspective illustrant une platine-support d'un mécanisme d'essuie-glace équipé de paliers de supports, réalisée selon l'état de la technique ;
- la figure 2 est une vue schématique en perspective d'un exemple de réalisation d'une plaque-support constituée par deux demi-plaques moulées selon l'invention, en association avec un tronçon d'élément de structure ;
- les figures 3 à 5 sont des vues schématiques, en section selon la ligne 3-3 de la figure 2 qui illustrent trois variantes de réalisation pour l'agencement d'un insert ;
- les figures 6 à 11 sont une série des schémas qui illustrent les différentes variantes de réalisation des moyens d'assemblage des deux demi-plaques de la plaque-support ;
- les figures 12 à 15 sont des vues schématiques illustrant différentes variantes de réalisation des moyens d'immobilisation de l'élément de structure par rapport à la plaque-support ; et
- les figures 16 et 17 sont deux vues schématiques en section selon la ligne 16-16 de la figure 2 qui illustrent deux variantes de réalisation pour la fixation de la plaque-support selon l'invention.

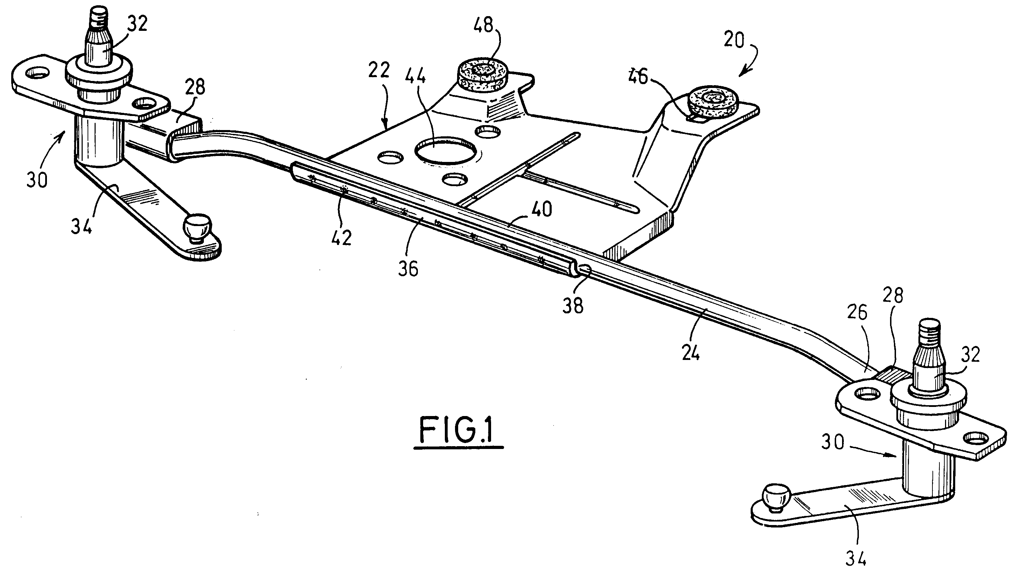

On a représenté sur la figure 1 une platine-support 20 pour un mécanisme d'essuie-glace.

Selon une conception connue, la platine-support 20 comporte une plaque-support 22 et un élément de structure allongé de forme tubulaire 24 dont chacun des tronçons libres d'extrémité 26 est reçu dans un manchon 28 appartenant à un support 30 qui reçoit à rotation un arbre 32 d'entraînement d'un essuie-glace (non représenté) auquel il transmet un mouvement qui lui est appliqué par une manivelle 34.

Selon la conception illustrée sur la figure 1, la plaque-support 22 est une plaque en tôle épaisse découpée emboutie et pliée dont un bord 36 est conformé pour délimiter un logement semi-cylindrique ouvert 38 qui reçoit un tronçon intermédiaire cylindrique 40 du tube de structure 24 qui lui est soudé, par exemple par des points 42 réalisés par soudage par résistance.

La plaque-support 12 comporte des trous 34 pour la fixation et le passage de différents composants appartenant au mécanisme d'entraînement des essuie-glace, ainsi que des lumières 46 prévues pour recevoir des éléments 48 de fixation de la plaque-support 22 sur la caisse du véhicule (non représentée).

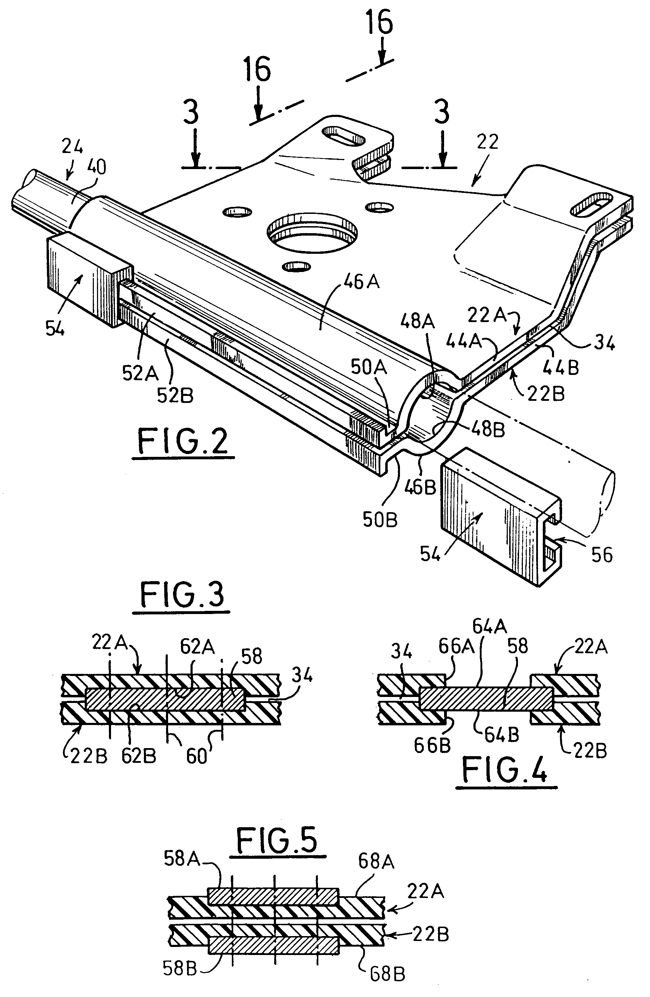

Conformément à l'invention, et comme cela est illustré notamment sur la figure 2, la plaque-support 22 est réalisée sous la forme de deux demi-plaques 22A et 22B moulées, par exemple en matière plastique, qui sont reliées entre elles selon un plan de joint 34 sensiblement médian par rapport à l'épaisseur globale de la plaque-support 22.

Chacune des deux demi-plaques 22A, 22B comporte une partie centrale principale plane 44A, 44B qui se prolonge par une partie de forme générale tubulaire 46A, 46B dont chacune délimite intérieurement un demi-logement semi-cylindrique 48A, 48B.

Les deux demi-logements 48A et 48B sont agencés en vis-à-vis l'un de l'autre et délimitent ensemble un trou axial débouchant qui constitue le logement qui reçoit le tronçon 40 de l'élément allongé de structure 24.

Dans le mode de réalisation illustré sur la figure 2, chacune des deux demi-plaques 22A, 22B comporte un bord longitudinal rectiligne 50A, 50B qui se prolonge par un bord de d'assemblage ou de liaison, replié à 90° vers l'extérieur, 52A, 52B pour permettre le serrage mutuel des deux demi-plaques, selon une direction sensiblement perpendiculaire au plan de leur portion plane principale 44A et 44B par des pinces 54 qui peuvent par exemple être mises en place par coulissement sur les bords 52A, 52B formant glissières et qui sont reçus dans l'encoche intérieure en forme de rail 56 de chacune des pinces 54.

Afin d'assurer dans les meilleures conditions la fixation de la plaque-support 22 sur un élément de structure de la caisse du véhicule, ou la fixation de composants du mécanisme d'essuie-glace sur la plaque-support 22, il est prévu au moins un insert métallique 58 dans lequel peuvent être formés différents trous de fixation dont les axes 60 sont schématisés sur la figure 3.

Dans la première variante de réalisation illustrée sur la figure 3, l'insert 58 est agencé entre les deux demi-plaques 22A, 22B dont chacune comporte un logement 62A, 62B de forme complémentaire de celle de l'insert.

Dans la variante de réalisation illustrée sur la figure 4, les faces opposées 64A et 64B de l'insert 58 s'étendent en regard d'un ou plusieurs trous 66A, 66B préalablement réalisés dans les deux demi-plaques 22A, 22B.

Dans la variante de réalisation illustrée sur la figure 5, c'est la face supérieure 68A, 68B de chacune des deux demi-plaques 22A, 22B qui reçoit un insert 58A, 58B qui est noyé dans la demi-plaque correspondante lors du moulage de cette dernière.

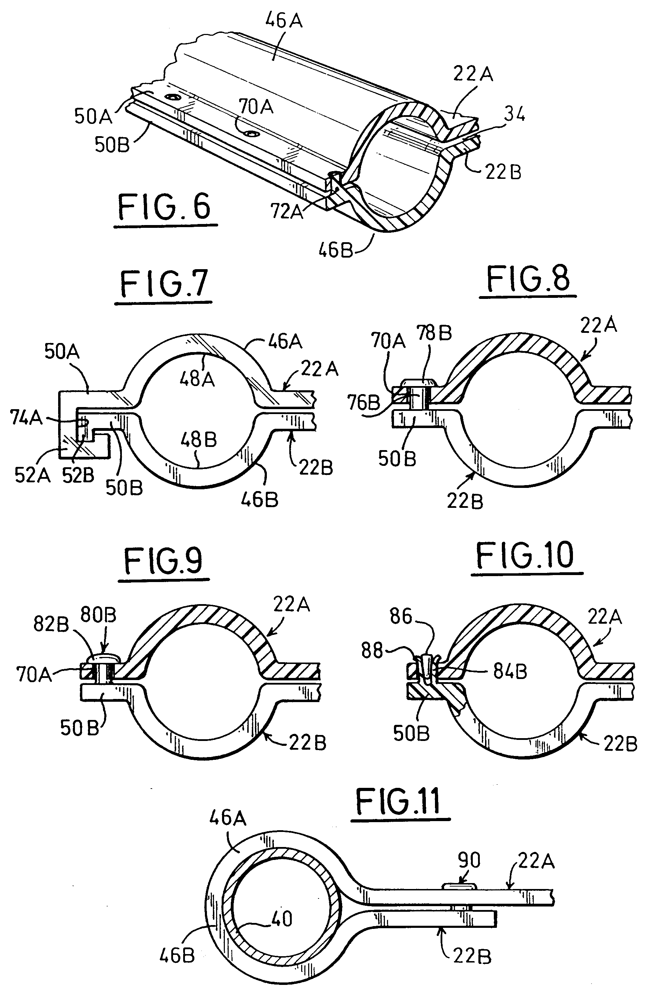

Dans la vue schématique partielle en perspective illustrée sur la figure 6, les moyens d'assemblage entre les deux demi-plaques 22A, 22B sont constitués par une série de trous 70A formés dans le bord longitudinal 50A de la demi-plaque 22A et par une série de pions cylindriques 72B formés venus de matière sur la face intérieure du bord longitudinal 50B et qui sont reçus dans les trous 70A à la manière de corps de rivets, l'assemblage final étant par exemple réalisé par collage et/ou par thermofusion des pions 72B.

Le collage peut, d'une manière générale, être utilisé comme moyen d'assemblage et de fixation principale ou complémentaire entre les surfaces en vis-à-vis des deux demi-plaques 22A, 22B selon le plan de joint 34.

La figure 7 est une vue schématique axiale en bout qui illustre des moyens d'assemblage entre les deux demi-plaques 22A, 22B par emboîtement mutuel entre le bord de liaison 52B rabattu à 90° et une rainure ou encoche 74A formée dans l'autre demi-plaque 22A sous la forme d'un bord de liaison replié en U 52A.

Le bord de liaison 52B peut être introduit dans l'encoche 74A transversalement pour permettre une articulation du type à charnière entre les deux demi-plaques 22A, 22B où il peut y être introduit en coulissement longitudinal.

Sur la vue schématique de la figure 8, on a représenté une variante de la figure 6 dans laquelle le bord longitudinal 50B de la demi-plaque inférieure 22B, réalisée en métal, comporte des corps de rivets 76B réalisés venus de matière qui sont reçus dans des trous 70A du bord longitudinal 50A de la demi-plaque 22A pour le sertissage ultérieur de leurs têtes 78B.

Dans la variante de réalisation illustrée sur la figure 9, le bord longitudinal 50B comporte un pion 80B qui est emboîté élastiquement dans un trou 70A et dont la tête 82B traverse, par déformation élastique, le trou 70A pour obtenir un phénomène d'emboîtement élastique.

Dans la variante de réalisation illustrée sur la figure 6, le bord longitudinal 50B de la demi-plaque 22B comporte un pion cylindrique 84B qui s'étend à travers un trou 70A de la demi-plaque 22A et qui, après assemblage, reçoit un coin de blocage 86 qui provoque l'écartement radial extérieur de son bord d'extrémité 88 pour assurer l'assemblage et le serrage mutuel des deux demi-plaques 22A et 22B.

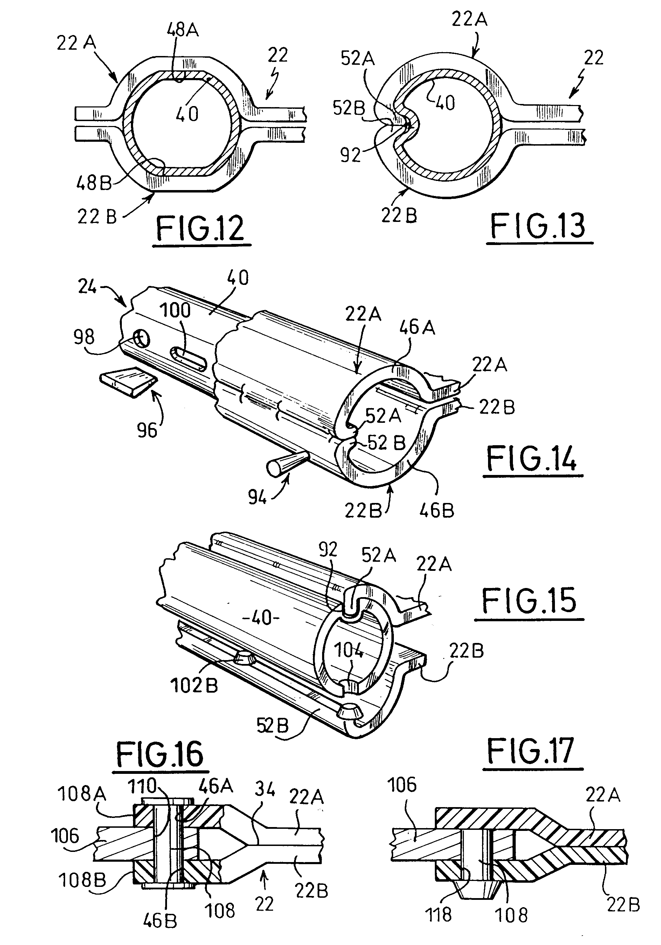

Dans la variante de réalisation schématisée sur la figure 11, les deux demi-plaques sont réalisées en une seule pièce et elles sont reliées entre elles au niveau du logement qui reçoit l'élément allongé de structure 24 pour constituer une sorte de pince qui est refermée sur le tronçon, par exemple par des rivets 90.

Il est par ailleurs nécessaire d'assurer l'immobilisation en rotation et selon la direction axiale, de l'élément allongé de structure 24 par rapport à la plaque-support 22.

Il est d'abord possible de réaliser, ou de compléter cette immobilisation, par collage du tronçon 40 de l'élément 24 qui est reçu dans le logement de la plaque-support.

Dans la variante de réalisation illustrée sur la figure 12, le tronçon 40 de l'élément 24 qui est reçu dans le logement 48A, 48B présente, en section transversale, un profil qui n'est pas de révolution et qui est reçu dans les deux demi-logements 48A, 48B de formes complémentaires s'opposant ainsi à toute rotation relative du tronçon 40 par rapport à la plaque-support 22.

Dans la variante de réalisation illustrée sur la figure 13, le tronçon 40 comporte une rainure longitudinale 92 qui s'étend radialement vers l'intérieur et chacun des bords rabattus de liaison 52A, 52B s'étend radialement vers l'intérieur et est reçu dans la rainure 92.

La rainure 92 constitue ainsi un moyen d'immobilisation en rotation du tronçon 40 par rapport à la plaque-support 22 et constitue en même temps un moyens d'assemblage entre les deux demi-plaques 22A et 22B.

Sur le schéma en perspective de la figure 14, on a représenté sous la forme d'un pion 94 et d'un coin 96 deux éléments transversaux de verrouillage qui peuvent être emmanchés à force entre les deux demi-plaques 22A, 22B au niveau de leurs bords de liaison 52A, 52B, ou traverser des trous prévus à cet effet dans les parois semi-cylindriques 46A, 46B pour être ensuite reçus dans des trous complémentaires 98 et 100 formés dans la paroi du tronçon 40 de l'élément allongé de structure 24.

Dans la variante de réalisation illustrée sur la figure 15, un bord longitudinal de liaison rabattu 52A de la demi-plaque 22A est reçu dans une rainure 92 du tronçon 40 tandis que le bord longitudinal de liaison 52 et de la demi-plaque 22B comporte des pions 102B qui sont prévus pour être emboîtés élastiquement dans des trous correspondants 64 formés dans la paroi tubulaire du tronçon 40.

On a représenté sur la figure 16 des moyens pour relier la plaque-support 22 à une pièce en forme de plaque 106 appartenant à la caisse du véhicule.

A cet effet, les bords longitudinaux 108A, 108B des deux demi-plaques 22A et 22B dans lesquelles sont formées des lumières 46A et 46B sont éloignés transversalement l'un de l'autre par rapport au plan de joint 34 et constituent une fourche qui reçoit l'élément 106, un axe formant rivet 108 étant reçu dans les lumières 46A et 46B et dans un trou 110 ou une lumière de l'élément en forme de plaque 106.

Dans la variante de réalisation illustrée sur la figure 17, l'élément formant rivet 108 est par exemple réalisé venu de matière avec la demi-plaque 22A et il est reçu dans un trou 112 formé dans le bord 108B de la demi-plaque 22B, la lumière pour le réglage de la fixation pouvant par exemple être réalisée dans l'élément en forme de plaque 106.

## Revendications

1. Platine-support (20) d'un mécanisme d'essuie-glace du type comportant une plaque (22) formant support pour divers composants du mécanisme, notamment pour des organes d'entraînement des essuie-glace, et qui comporte des moyens pour sa fixation sur un élément de la caisse du véhicule, et du type comportant au moins un élément de structure de forme allongé (24) fixé à la plaque-support (22) et dont un tronçon d'extrémité libre (26) porte un palier de support (30) pour un arbre d'essuie-glace (32), caractérisée en ce que la plaque-support (22) est réalisée en deux demi-plaques (22A, 22B) et comporte un logement (46A, 46B) qui reçoit une partie (40) de l'élément de structure (24).

2. Platine-support selon la revendication 1, caractérisée en ce que le logement est constitué par deux demi-logements (48A, 48B) dont chacun est formé dans une demi-plaque (22A, 22B) et s'ouvre dans le plan de joint (34) des deux demi-plaques.

3. Platine-support selon l'une des revendications 1 ou 2, caractérisée en ce que les deux demi-plaques (22A, 22B) sont collées selon leur plan de joint (34).

4. Platine-support selon l'une quelconque des revendications précédentes, caractérisée en ce qu'il est prévu des moyens d'assemblage des deux demi-plaques (22A, 22B).

5. Platine-support selon la revendication 4, caractérisée en ce que les moyens d'assemblage sont des moyens par emboîtement de formes complémentaires agencées le long d'un bord (550A, 50B) de la plaque-support (22).

6. Platine-support selon la revendication 4, caractérisée en ce que les moyens d'assemblage sont des moyens de serrage (54) selon une direction sensiblement perpendiculaire au plan général de la plaque-support (22).

7. Platine-support selon la revendication 6, caractérisée en ce que les moyens de serrage comportent des pinces (54) qui enserrent des bords en vis-à-vis (52A, 52B) des deux demi-plaques (22A, 22B).

8. Platine-support selon l'une quelconque des revendications 4 à 6, caractérisée en ce que les moyens d'assemblage comportent des moyens formant rivets réalisés venus de matière avec les deux demi-plaques (22A, 22B).

9. Platine-support selon l'une quelconque des revendications précédentes, caractérisée en ce que les deux demi-plaques (22A, 22B) sont réalisées par moulage en matière plastique ou en alliage léger.

10. Platine-support selon l'une quelconque des revendications précédentes, caractérisée en ce que le logement est un trou qui reçoit un tronçon (40) de l'élément de structure (24) et en ce qu'il est prévu des moyens d'immobilisation axiale et en rotation du tronçon (40) dans le logement.

11. Platine-support selon la revendication 10, caractérisée en ce que les moyens d'immobilisation sont des moyens par coopération de formes complémentaires (48A, 48B).

12. Platine-support selon la revendication 11, caractérisée en ce que la paroi du tronçon (40) de l'élément de structure (24) comporte une rainure longitudinale (92) et en ce que chacune des deux demi-plaques (22A, 22B) comporte un bord longitudinal replié (52A, 52B) qui est reçu au moins partiellement dans la rainure (92).

13. Platine-support selon la revendication 10, caractérisée en ce que les moyens d'immobilisation comportent au moins un élément transversal de verrouillage (94, 96) qui est reçu à l'intérieur du tronçon (40) de l'élément de structure (24).

14. Platine-support selon la revendication 13, caractérisée en ce que l'élément transversal de verrouillage (102B) est réalisé venu de matière par moulage avec une demi-plaque (22B).

15. Platine-support selon la revendication 13, caractérisée en ce que l'élément transversal de verrouillage est un élément rapporté (94, 96) qui traverse la paroi du logement et qui est reçu à l'intérieur du tronçon (40) de l'élément de structure (24).

16. Platine-support selon l'une quelconque des revendications précédentes, caractérisée en ce que le tronçon (40) de l'élément de structure (24) est collé dans le logement.

17. Platine-support selon l'une quelconque des revendications précédentes, caractérisée en ce que les moyens pour la fixation de la plaque-support comportent des trous pour le passage de corps appartenant à des organes de fixation tels que des vis qui sont formés dans au moins un insert (58).

18. Platine-support selon la revendication 17 prise en combinaison avec la revendication 9, caractérisée en ce que au moins un insert (58A, 58B) est noyé lors du moulage d'une demi-plaque (22A, 22B).

19. Platine-support selon la revendication 17, caractérisée en ce que au moins un insert (58) est retenu entre les deux demi-plaques (22A, 22B).
